# EUROPEAN PATENT SPECIFICATION

(11) **EP 4 264 440 B1**
(45) Date of publication and mention of the grant of the patent: **22.05.2024**
(21) Application number: 21830583.7
(22) Date of filing: 02.12.2021
(51) Int. Cl.: G06F 12/06, G06F 12/14

(54) **DATA SECURITY WHEN TIERING VOLATILE AND NON-VOLATILE BYTE-ADDRESSABLE MEMORY**
DATENSICHERHEIT BEI DER SCHICHTUNG VON FLÜCHTIGEM UND NICHTFLÜCHTIGEM BYTEADRESSIERBAREM SPEICHER
SÉCURITÉ DE DONNÉES LORS DE LA HIÉRARCHISATION D'UNE MÉMOIRE VOLATILE ET NON VOLATILE ADRESSABLE PAR UN OCTET

(30) Priority: 15.12.2020 LU 102287
(43) Date of publication of application: 25.10.2023
(73) Proprietor: Microsoft Technology Licensing, LLC, Redmond, WA 98052-6399 (US)
(72) Inventor: BAK, Yevgeniy, Redmond, Washington 98052 (US); IYIGUN, Mehmet, Redmond, Washington 98052 (US); WANG, Landy, Redmond, Washington 98052 (US)
(74) Representative: CMS Cameron McKenna Nabarro Olswang LLP
(86) International application number: PCT/US2021/072705
(87) International publication number: WO 2022/133388

(56) References cited:
- EP-A1- 3 663 927
- CN-A- 108 959 129

## Description

### TECHNICAL FIELD

The present disclosure relates to systems, methods, and devices that manage communication of data between volatile and non-volatile byte-addressable memory tiers.

### BACKGROUND

Conventional computer systems have primarily utilized two categories of writable data storage media: volatile byte-addressable memory (e.g., dynamic random-access memory, or DRAM) that loses its contents unless it is being actively refreshed, and non-volatile block-addressable (e.g., blocks of 512 bytes, 4k bytes, etc.) storage devices such as hard disk drives (HDDs), solid-state drives (SSDs), etc. that retain their contents even in the absence of electrical power. In general, volatile byte-addressable memory has been characterized by lower access latencies and higher bandwidth than non-volatile block-addressable storage devices. In operation, computer systems generally rely on volatile byte-addressable memory as system random access memory (RAM) that stores runtime data associated with executing code with the expectation that this system RAM is cleared when the computer system is powered down or restarted, and generally rely on non-volatile block-addressable storage devices for long-term persistent data storage, and sometimes as a place to temporarily store data (e.g., cold memory pages) when there is a shortage of available system RAM.

While volatile DRAM has historically been the dominant form of available byte-addressable memory, recent hardware developments have produced practical forms of non-volatile byte-addressable memory. Various forms of non-volatile byte-addressable memory are referred to as persistent memory (PMEM) or non-volatile random-access memory (NVRAM), and example technologies include phase-change memory (PCM), ferroelectric random-access memory (FeRAM), magnetoresistive random-access memory (MRAM), and resistive random-access memory (ReRAM). Unlike volatile byte-addressable memory such as DRAM, non-volatile byte-addressable memories do not lose their contents in the absence of electrical power. While performance characteristics vary, non-volatile byte-addressable memory technologies frequently have latencies and bandwidths that fall between those of volatile byte-addressable memory (e.g., DRAM) and non-volatile block-addressable storage devices (e.g., HDDs, SSDs, etc.). Additionally, some non-volatile byte-addressable memory technologies have a cost per unit of capacity that is less than DRAM.
EP 3663927A1 describes a method for the energy-saving operation of a security element (2) of a one-chip system device (1), in which the following steps are carried out: a) receiving an energy saving command by the security element (2); b) transferring at least one current program configuration (11) of the security element (2) from a volatile memory (3) of the security element (2) to a memory external to the security element depending on the energy-saving command; c) adapting an energy supply of at least the volatile memory (3) of the security element (2); and d) Energy-saving operation of the security element (2) after the transmission, wherein the current program configuration (11) is transmitted to a module (4, 5, 6) of the one-chip system device (1) which is separate from the security element (2) and comprises the memory (7) external to the security element.
EP3170087A0 describes a flash memory process and device for encrypting and storing data in a non-volatile flash memory associated with a host system. The device includes a flash memory, an encryption engine, a key store, a SRAM to interface with the host system, and associated control circuitry. When powered on, the device first determines if a valid encryption key is held in the key store. If a valid key is held in the store, a program flag is set when encrypted data in the flash memory is ready to be decrypted by the engine and stored in the SRAM for use by the host system, or when data originating from the host system and stored in the SRAM is ready to be encrypted by the engine and programmed into the flash memory. The device can be embedded in any host system wherein data must be encrypted while at rest in a memory.

### BRIEF SUMMARY

The invention is set out in the appended set of claims.

Due to the performance and cost characteristics of non-volatile byte-addressable memories (e.g., PMEM, NVRAM, etc.), recent research and development has focused on expanding the concept of system RAM to include a combination of non-volatile byte-addressable memory and volatile byte-addressable memory (e.g., DRAM). Some techniques enable enlightened applications to discover the presence of a pool of non-volatile byte-addressable memory, and to request a direct memory allocation from that pool into the application's memory space for use as the application sees fit. Other techniques utilize a pool of non-volatile byte-addressable memory to transparently improve memory management and application performance by automatically offloading portions of cached memory data from system RAM to the non-volatile byte-addressable memory (e.g., as an alternative to discarding that cached memory data or paging that cached memory data to a block-based device).

However, because they are non-volatile, the data stored on non-volatile byte-addressable memories survives system restarts/reboots and losses of power. This can violate expectations under which applications were developed-namely, that the contents of system RAM are cleared if there is an interruption of power (e.g., when a system is restarted, rebooted, or powered-off; if RAM hardware is physically removed; etc.) and that it is thus relatively safe to store sensitive data in system RAM. Thus, most applications therefore place data in system RAM with the presumption that this data will not be stored "at rest," and that there is therefore no need to apply cryptographic protections to that data.

At least some embodiments herein operate to enable use of non-volatile byte-addressable memories in connection with system RAM, while ensuring that data stored on non-volatile byte-addressable memories is cryptographically protected. In embodiments, when a portion of data is to be copied from a volatile byte-addressable memory to a non-volatile byte-addressable memory, a memory manager considers a cryptographic policy associated with that data, together with cryptographic capabilities of the non-volatile byte-addressable memory (if any), and uses software encryption to ensure that data placed on the non-volatile byte-addressable memory is protected per the cryptographic policy if the non-volatile byte-addressable memory does not, itself, provide sufficient cryptographic protections. As such, the memory manager intelligently operates to protect data being copied from the volatile byte-addressable memory to the non-volatile byte-addressable memory-leveraging cryptographic capabilities of the non-volatile byte-addressable memory when sufficient-and using software encryption when cryptographic capabilities of the non-volatile byte-addressable memory are insufficient.

In some embodiments, methods, systems, and computer program products ensure data security when tiering volatile and non-volatile byte-addressable memory. In embodiments, tiering volatile and non-volatile byte-addressable memory means arranging these memories such that the volatile byte-addressable memory is a primary memory tier, and the non-volatile byte-addressable memory is a secondary memory tier. In this arrangement, applications interact with the primary memory tier (i.e., the volatile byte-addressable memory), while an operating system (OS) offloads cache data from the primary memory tier to the secondary memory tier (i.e., the non-volatile byte-addressable memory). These embodiments provide (or operate within) computing environments comprising a processor, a first memory that is byte-addressable and volatile, and a second memory that is byte-addressable and non-volatile, and operate to ensure data security when copying data from the first memory to the second memory. These embodiments identify one or more portions of cache data stored in the first memory that are to be copied to the second memory. Each portion of cache data is associated with a corresponding set of cryptographic requirements for storing the portion of cache data on non-volatile storage. These embodiments also identify a set of cryptographic capabilities of the second memory. For each of the one or more portions of cache data that are to be copied to the second memory, these embodiments perform one of (i) when each requirement in the corresponding set of cryptographic requirements is met by the set of cryptographic capabilities, copying the portion of cache data to the second memory while relying on the second memory to encrypt the portion of cache data, or (ii) when at least one requirement in the corresponding set of cryptographic requirements is not met by the set of cryptographic capabilities encrypting the portion of cache data to generate an encrypted portion of cache data and copying the encrypted portion of cache data to the second memory.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:
Figure 1 illustrates an example computer architecture that facilitates ensuring data security when tiering volatile and non-volatile byte-addressable memory;
Figure 2 illustrates an example of a tiered memory manager;
Figure 3A illustrates a flow chart of an example method for ensuring data security when copying data from a first memory that is byte-addressable and volatile to a second memory that is byte-addressable and non-volatile; and
Figure 3B illustrates a flow chart of an example method for ensuring data security when copying data from a first memory that is byte-addressable and volatile to a second memory that is byte-addressable and non-volatile.

### DETAILED DESCRIPTION

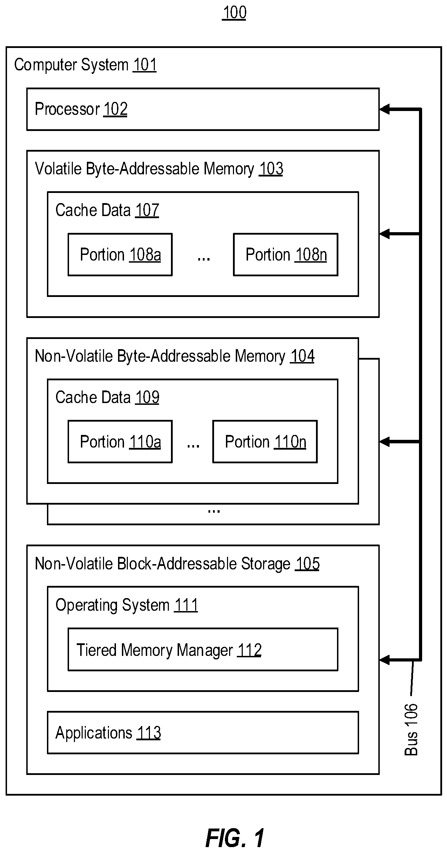

Figure 1 illustrates an example computer architecture 100 that facilitates ensuring data security when tiering volatile and non-volatile byte-addressable memory. As shown, computer architecture 100 comprises a computer system 101, which in turn comprises a processor 102 (i.e., one or more processors), a volatile byte-addressable memory 103 (e.g., DRAM), a non-volatile byte-addressable memory 104 (e.g., PMEM, NVRAM, etc.), and a non-volatile block-addressable storage 105 (e.g., HDD, SSD, etc.), each interconnected by a bus 106 (or a plurality of busses).

In general, the computer system 101 is configured to manage the volatile byte-addressable memory 103 and the non-volatile byte-addressable memory 104 in a tiered manner, with the volatile byte-addressable memory 103 being a primary memory tier and the non-volatile byte-addressable memory 104 being a secondary memory tier. In particular, Figure 1 shows that the non-volatile block-addressable storage 105 comprises computer-executable instructions and data structures corresponding to an OS 111, which includes a tiered memory manager 112. In embodiments, the tiered memory manager 112 presents the volatile byte-addressable memory 103 to applications 113 as system RAM as would be conventional, meaning that execution of applications 113 results in portions 108 of cache data 107 (e.g., portion 108a to portion 108n) being stored in the volatile byte-addressable memory 103.

In embodiments, this cache data 107 comprises memory pages (e.g., as portions 108) that have been utilized by these applications 113 including, for example, data loaded from the non-volatile block-addressable storage 105 into an application's memory space. In one example embodiment, referred to herein as the "trimmed memory" embodiment, the cache data 107 comprises memory pages (e.g., as portions 108) that have been accessed by applications 113 at some point during their execution, but that have been later trimmed or unmapped from those application's working sets. In the trimmed memory embodiment, the cache data 107 comprises a standby list, an inactive queue, etc., in which memory pages (e.g., portions 108) are arranged from most recently accessed (i.e., hottest) to least recently accessed (i.e., coldest). Conventionally, these memory pages are available to be re-mapped into application's working set again if later accessed by the application, or to be discarded and repurposed (e.g., starting with the coldest memory page) to active memory when a memory allocation is needed that cannot be otherwise fulfilled from free memory.

In another example embodiment, referred to herein as the "memory paging" embodiment, the cache data 107 comprises memory pages (e.g., as portions 108) that have been accessed by applications 113, and that are still mapped into those application's working sets. Conventionally, these memory pages may be paged out the non-volatile block-addressable storage 105 (e.g., as a page file or page partition) for later accesses when there is pressure on available memory in volatile byte-addressable memory 103; in many implementations, this page file/partition is encrypted on the non-volatile block-addressable storage 105 at the block level (e.g., using BITLOCKER, FILEVAULT, and the like), thereby protecting paged-out memory pages while they are stored at rest.

Notably, various embodiments implement the trimmed memory embodiment individually, implement the memory paging embodiment individually, or implement both the trimmed memory embodiment and the memory paging embodiment concurrently.

In embodiments, the tiered memory manager 112 uses the non-volatile byte-addressable memory 104 to automatically and transparently (i.e., to applications 113 and even to portions of OS 111) improve memory management and application performance by offloading portions 108 of cache data 107 data from the volatile byte-addressable memory 103 to the non-volatile byte-addressable memory 104 (represented as portions of cache data 109, including portion 110a to portion 110n, stored in the non-volatile byte-addressable memory 104).

Continuing the trimmed memory embodiment, instead of discarding and repurposing cold memory pages when a memory allocation is needed that cannot be otherwise fulfilled from free memory, the tiered memory manager 112 moves those cold memory pages to the non-volatile byte-addressable memory 104. By moving cold memory pages to the non-volatile byte-addressable memory 104, the tiered memory manager 112 can consider those memory pages as remaining "resident" in system RAM (rather than being discarded as before). Additionally, memory pages can be quickly restored from the non-volatile byte-addressable memory 104 to the volatile byte-addressable memory 103 using a relatively computationally inexpensive, processor-bound, byte-based memory copy operation if they later need to be mapped into an application's working set.

Continuing the memory paging embodiment, instead of paging memory pages to a page file/partition on the non-volatile block-addressable storage 105 (a relatively computationally expensive operation that occurs at the block level), the tiered memory manager 112 moves those memory pages to the non-volatile byte-addressable memory 104 using byte-level operations. Again, these memory pages can be quickly restored from the non-volatile byte-addressable memory 104 to the volatile byte-addressable memory 103 using a relatively computationally inexpensive, processor-bound, byte-based memory copy operation if they later need to be mapped into an application's working set. In some implementations, the non-volatile block-addressable storage 105 is used as a write-back cache positioned between the volatile byte-addressable memory 103 and the non-volatile block-addressable storage 105. This means that, when a memory page is paged to the non-volatile block-addressable storage 105 instead of the non-volatile block-addressable storage 105, the operation can complete without completion of a relatively slow block-based disk operation, and the memory page can then be lazily written to the non-volatile block-addressable storage 105.

Notably, applications have conventionally operated with the assumption that system RAM (i.e., volatile byte-addressable memory 103) is volatile, and that the contents of system RAM are therefore cleared if there is an interruption of power to system RAM (e.g., when a system is restarted, rebooted, or powered-off; if RAM hardware is physically removed; etc.). Thus, most applications therefore place data in system RAM with the presumption that this data will not be stored "at rest," and that there is therefore no need to apply cryptographic protections to that data. However, since data stored by the non-volatile byte-addressable memory 104 survives losses of power, if the tiered memory manager 112 offloads portions 108 of cache data 107 data to the non-volatile byte-addressable memory 104 (using either of the trimmed memory embodiment or the memory paging embodiment), the tiered memory manager 112 could violate these presumptions and leave potentially confidential data accessible to malicious parties. Accordingly, in the embodiments herein, the tiered memory manager 112 is configured to intelligently operate to protect data being copied from the volatile byte-addressable memory 103 to the non-volatile byte-addressable memory 104.

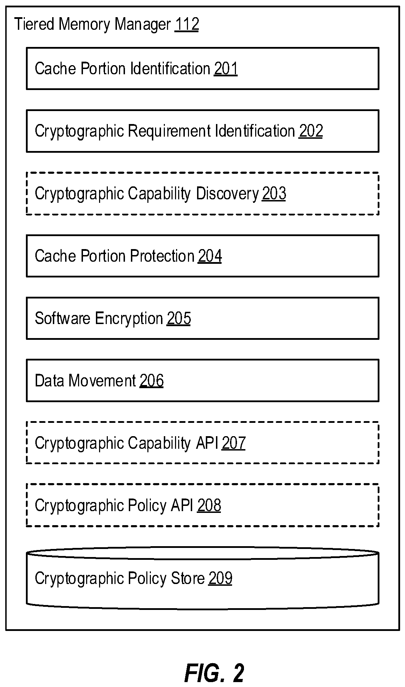

To illustrate operation of the tiered memory manager 112, Figure 2 details further internal components of the tiered memory manager 112 of Figure 1. As illustrated, the tiered memory manager 112 comprises one or more of a cache portion identification component 201, a cryptographic requirement identification component 202, a cryptographic capability discovery component 203, a cache portion protection component 204, a software encryption component 205, a data movement component 206, a cryptographic capability application programming interface (API) 207, a cryptographic policy API 208, and cryptographic policy store 209, that each represent functions that the tiered memory manager 112 implements in accordance with various embodiments described herein. It will be appreciated that the depicted components-including their identity and arrangement-are presented merely as an aid in describing various embodiments of the tiered memory manager 112 described herein, and that these components are non-limiting to how software and/or hardware might implement various embodiments of the tiered memory manager 112 described herein, or of the particular functionality thereof.

The cache portion identification component 201 identifies one or more portions 108 of cache data 107 stored in the volatile byte-addressable memory 103 that are to be copied to the non-volatile byte-addressable memory 104 (i.e., as one or more of portions 110 of cache data 109). In some embodiments, the portions 108 comprise memory pages (e.g., as portions 108) that have been accessed by applications 113 at some point during their execution, but that have been later trimmed or unmapped from those application's working sets (i.e., the trimmed memory embodiment). In additional, or alternative, embodiments, the portions 108 comprise memory pages (e.g., as portions 108) that have been accessed by applications 113, and that are still mapped into those application's working sets (i.e., the memory paging embodiment).

The cryptographic requirement identification component 202 determines one or more cryptographic requirements applicable to protecting the one or more portions 108 identified by the cache portion identification component 201. In embodiments, these cryptographic requirements comprise cryptographic key lifetime (e.g., a length of time, until a system reboot, etc.), cryptographic key length (e.g., 128-bit, 192-bit, 256-bit, etc.), cryptographic algorithm (e.g., AES, Triple DES, Twofish, etc.), and the like. In some embodiments the cryptographic requirement identification component 202 identifies a single set of cryptographic requirements that are applicable to all data that is copied from the volatile byte-addressable memory 103 to the non-volatile byte-addressable memory 104.

In other embodiments, the cryptographic requirement identification component 202 identifies multiple sets of cryptographic requirements, with each set being applicable to subsets of data that is copied from the volatile byte-addressable memory 103 to the non-volatile byte-addressable memory 104. For example, in Figure 2 the cryptographic policy store 209 represents functionality of the tiered memory manager 112 to store different sets of cryptographic requirements, and which are accessed by the cryptographic requirement identification component 202. For example, in some embodiments, the cryptographic policy store 209 stores different sets of cryptographic requirements for different applications in applications 113, and thus the cryptographic requirement identification component 202 identifies different sets of cryptographic requirements for different ones of portions 108, based on which of the applications 113 those portions 108 correspond to. In some embodiments, and as represented by the cryptographic policy API 208, the tiered memory manager 112 provides and API enabling applications to specify cryptographic requirements.

If present, the cryptographic capability discovery component 203 discovers one or more hardware-based cryptographic capabilities, if any, of the non-volatile byte-addressable memory 104. In some implementations, the non-volatile byte-addressable memory 104 includes some capability (e.g., by a memory controller) to automatically encrypt data copied to the non-volatile byte-addressable memory 104. Thus, in some embodiments the cryptographic capability discovery component 203 discovers a set of one or more cryptographic capabilities of the non-volatile byte-addressable memory 104. In embodiments, these cryptographic capabilities comprise cryptographic key lifetime (e.g., a length of time, until a system reboot, etc.), cryptographic key length (e.g., 128-bit, 192-bit, 256-bit, etc.), cryptographic algorithm (e.g., AES, Triple DES, Twofish, etc.), and the like. In other implementations, the non-volatile byte-addressable memory 104 lacks any capability to automatically encrypt data copied to the non-volatile byte-addressable memory 104. Thus, in some embodiments the cryptographic capability discovery component 203 discovers no cryptographic capabilities of the non-volatile byte-addressable memory 104 (i.e., an empty set of cryptographic capabilities).

The cache portion protection component 204 considers which portion(s) 108 of cache data 107 were identified by the cache portion identification component 201, which set(s) of cryptographic requirements were identified by the cryptographic requirement identification component 202 as being relevant to the identified portion(s) 108, and which cryptographic capabilities (if any) were identified by the cryptographic capability discovery component 203. The cache portion protection component 204 then determines how to ensure that the set of cryptographic requirements associated with each portion 108 identified by the cache portion protection component 204 is met when the portion 108 is copied to the non-volatile byte-addressable memory 104.

In embodiments, when each cryptographic requirement for a given portion 108 is met by cryptographic capabilities of the non-volatile byte-addressable memory 104, the data movement component 206 copies that portion 108 to the non-volatile byte-addressable memory 104. In these embodiments, the cache portion protection component 204 relies on the non-volatile byte-addressable memory 104, itself, to encrypt the portion 108 prior to durably storing the portion 108. In these embodiments, the tiered memory manager 112 provides a technical effect of ensuring that data is protected at rest when copied from the volatile byte-addressable memory 103 in a manner that meets cryptographic requirements for that data, while utilizing performant hardware-based cryptographic capabilities of the non-volatile byte-addressable memory 104.

In embodiments, when at least one cryptographic requirement for a given portion 108 is not met by cryptographic capabilities of the non-volatile byte-addressable memory 104, software encryption component 205 encrypts that portion 108 using the processor 102, and then the data movement component 206 copies that encrypted portion 108 to the non-volatile byte-addressable memory 104. While termed herein "software encryption," some embodiments the software encryption component 205 relied on one or more hardware cryptographic accelerators, such as cryptographic processor extension (e.g., INTEL AES-NI (trade mark)). In these embodiments, the tiered memory manager 112 provides a technical effect of ensuring that data is protected at rest when copied from the volatile byte-addressable memory 103 in a manner that meets cryptographic requirements for that data, even when the non-volatile byte-addressable memory 104 lacks any cryptographic capabilities, or when the non-volatile byte-addressable memory 104 lacks sufficient cryptographic capabilities.

In some embodiments, the tiered memory manager 112 also enables enlightened applications to request direct allocations of the non-volatile byte-addressable memory 104. Thus, the tiered memory manager 112 is illustrated as potentially including a cryptographic capability API component 207. In embodiments, when queried, the cryptographic capability API component 207 returns the cryptographic capabilities (if any) of the non-volatile byte-addressable memory 104, as obtained using the cryptographic capability discovery component 203. In embodiments, enlighten applications are permitted to decided whether or not to request a memory allocation based on these cryptographic capabilities. In other embodiments, the tiered memory manager 112 refuses an allocation to enlighten applications if the cryptographic capabilities do not meet a particular set of cryptographic requirements.

The following discussion now refers to a number of methods and method acts. Although the method acts may be discussed in certain orders, or may be illustrated in a flow chart as occurring in a particular order, no particular ordering is required unless specifically stated, or required because an act is dependent on another act being completed prior to the act being performed.

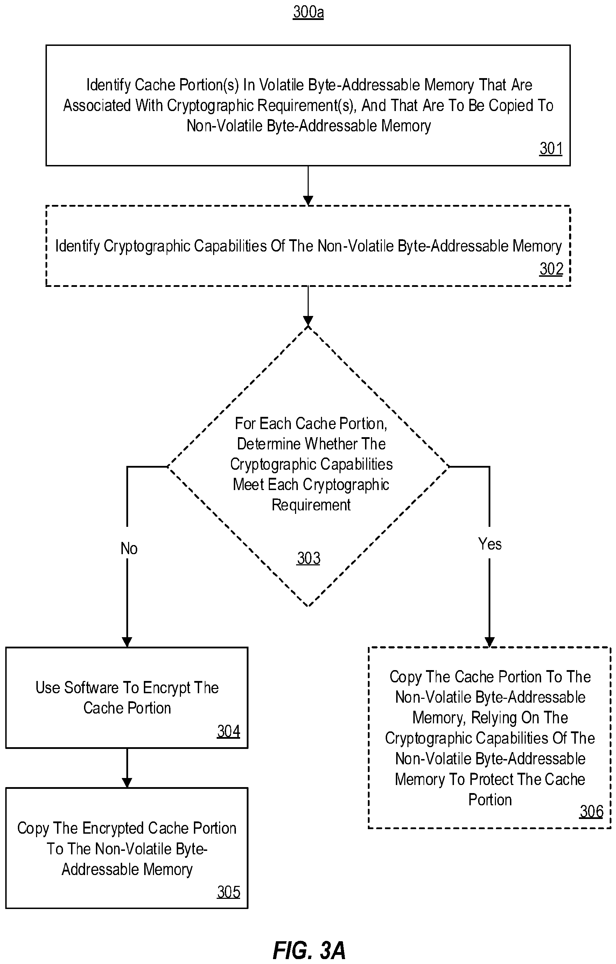

Figure 3A illustrates a flow chart of an example method 300a for ensuring data security when copying data from a first memory that is byte-addressable and volatile to a second memory that is byte-addressable and non-volatile. Method 300a will be described with respect to the components and data of computer architecture 100.

Method 300a comprises an act 301 of identifying cache portion(s) in volatile byte-addressable memory that are associated with cryptographic requirement(s), and that are to be copied to non-volatile byte-addressable memory. In some embodiments, act 301 comprises identifying one or more portions of cache data stored in the first memory that are to be copied to the second memory, each portion of cache data being associated with a corresponding set of cryptographic requirements for storing the portion of cache data on non-volatile storage. In an example, the cache portion identification component 201 identifies one or more portions 108 of cache data 107 stored in the volatile byte-addressable memory 103. As discussed in the trimmed memory embodiment, the one or more portions of cache data may comprise one or more trimmed memory pages in a standby list, with the coldest memory page(s) being copied to the second memory (i.e., the non-volatile byte-addressable memory 104) instead of being discarded. As discussed in the memory paging embodiment, the one or more portions of cache data may comprise one or more memory pages copied to a page file stored on the second memory (i.e., the non-volatile byte-addressable memory 104).

As represented by the cryptographic policy store 209, these portions 108 are associated with one or more sets of cryptographic requirements-such as one or more of a cryptographic key lifetime, a cryptographic key length, or a cryptographic algorithm-and are identifiable by the cryptographic requirement identification component 202. In some embodiments, each portion of cache data is associated with a common set of cryptographic requirements. In these embodiments, the cryptographic policy store 209 stores a single set of cryptographic requirements applicable to all of the cache data 107. In other embodiments, different portions 108 of the cache data 107 are associated with different sets of cryptographic requirements, such as on a per-application basis, such that the one or more portions of cache data comprise (i) a first portion of cache data associated with a corresponding first set of cryptographic requirements, and (ii) a second portion of cache data associated with a corresponding second set of cryptographic requirements.

In embodiments, method 300a comprises an act 302 of identifying cryptographic capabilities of the non-volatile byte-addressable memory. In some embodiments, act 302 comprises identifying a set of cryptographic capabilities of the second memory. In an example, the cryptographic capability discovery component 203 discovers cryptographic capabilities of the non-volatile byte-addressable memory 104, if any. In embodiments, cryptographic capabilities include includes one or more of a cryptographic key lifetime, a cryptographic key length, or a cryptographic algorithm. In embodiments in which the non-volatile byte-addressable memory 104 lacks any cryptographic capability, then in act 302 the set of cryptographic capabilities is an empty set.

In embodiments, method 300a comprises an act 303 of, for each cache portion, determining whether the cryptographic capabilities meet each cryptographic requirement. In some embodiments, act 303 comprises, for each of the one or more portions of cache data that are to be copied to the second memory, determining whether each requirement in the corresponding set of cryptographic requirements is met by the set of cryptographic capabilities. In an example, for each cache portion, the cache portion protection component 204 determines whether the cryptographic requirement(s) for the cache portion are met by cryptographic capabilities of the non-volatile byte-addressable memory 104. As shown, act 303 is a decision block that comprises a "no" path to act 304 and act 305 when at least one requirement in the corresponding set of cryptographic requirements is not met by the set of cryptographic capabilities, or a "yes" path to act 306 when each requirement in the corresponding set of cryptographic requirements is met by the set of cryptographic capabilities. Thus, based on the outcome of the determination in act 303, method 300a takes one of the "no" path to act 304 and act 305 or the yes" path to act 306. Notably, by taking different paths depending on the cryptographic capabilities of non-volatile byte-addressable memory 104, act 303 facilitates an inventive step of utilizing efficient hardware encryption capabilities of the non-volatile byte-addressable memory 104 when they are sufficient, while ensuring that data is protected according to the policy when hardware encryption capabilities of the non-volatile byte-addressable memory 104 are insufficient to meet that policy.

When following the "no" path from act 303 (i.e., when at least one requirement in the corresponding set of cryptographic requirements is not met by the set of cryptographic capabilities), method 300a comprises act 304 of using software to encrypt the cache portion. In some embodiments, act 304 comprises encrypting the portion of cache data to generate an encrypted portion of cache data. In an example, the cache portion protection component 204 instructs the software encryption component 205 to encrypt the cache portion using the processor 102. Thus, in embodiments, act 304 comprises executing one or more software instructions at the processor to encrypt the portion of cache data. As explained, in embodiments, software encryption can utilize hardware accelerators. Thus, in embodiments, the one or more software instructions leverage a hardware encryption acceleration capability of the processor. When following the "no" path from act 303, method 300a also comprises act 305 of copying the encrypted cache portion to the non-volatile byte-addressable memory. In some embodiments, act 305 comprises copying the encrypted portion of cache data to the second memory. In an example, the data movement component 206 copies the encrypted cache portion (i.e., which was generated in act 304) to the non-volatile byte-addressable memory 104. Notably, unlike copying data to the non-volatile block-addressable storage 105, in embodiments copying the encrypted portion of cache data to the second memory in act 305 is a processor-bound memory copy operation. In acts 304 and 305, the tiered memory manager 112 provides a technical effect of ensuring that data is protected at rest when copied from the volatile byte-addressable memory 103 in a manner that meets cryptographic requirements for that data, even when the non-volatile byte-addressable memory 104 lacks any cryptographic capabilities, or when the non-volatile byte-addressable memory 104 lacks sufficient cryptographic capabilities.

Alternatively, when following the "yes" path from act 303 (i.e., when each requirement in the corresponding set of cryptographic requirements is met by the set of cryptographic capabilities), method 300a comprises act 306 of copying the cache portion to the non-volatile byte-addressable memory, relying on the cryptographic capabilities of the non-volatile byte-addressable memory to protect the cache portion. In some embodiments, act 306 comprises copying the portion of cache data to the second memory while relying on the second memory to encrypt the portion of cache data. In an example, the data movement component 206 copies the unencrypted cache portion to the non-volatile byte-addressable memory 104, relying on the non-volatile byte-addressable memory 104 to encrypt the cache portion. Notably, unlike copying data to the non-volatile block-addressable storage 105, in embodiments copying the portion of cache data to the second memory in act 306 is a processor-bound memory copy operation. In act 306, the tiered memory manager 112 provides a technical effect of ensuring that data is protected at rest when copied from the volatile byte-addressable memory 103 in a manner that meets cryptographic requirements for that data, while utilizing performant hardware-based cryptographic capabilities of the non-volatile byte-addressable memory 104.

Notably, in embodiments in which different portions 108 of the cache data 107 are associated with different sets of cryptographic requirements, such as on a per-application basis, method 300a may take the "no" path from act 303 for some cache portions and take the "yes" path from act 303 for other cache portions. For example, in some embodiments, method 300a comprises both of (i) based on at least one requirement in the corresponding first set of cryptographic requirements being met by the set of cryptographic capabilities, copying a first portion of cache data to the second memory while relying on the second memory to encrypt the first portion of cache data, and (ii) based on at least one requirement in the corresponding second set of cryptographic requirements not being met by the set of cryptographic capabilities, encrypting a second portion of cache data to generate an encrypted second portion of cache data, and copying the encrypted second portion of cache data to the second memory.

As discussed in connection with Figure 2, some embodiments of the tiered memory manager 112 include a cryptographic capability API component 207 that enables enlightened applications to discover capabilities of the non-volatile byte-addressable memory 104. Thus, in some embodiments, method 300a also comprises comprising presenting a first API to at least one application executing at the processor, the first API identifying a least a portion of the set of cryptographic capabilities. Additionally, as discussed in connection with Figure 2, some embodiments of the tiered memory manager 112 include a cryptographic policy API 208 that enables applications to specify their cryptographic requirements. Thus, in embodiments, method 300a also comprises presenting a second API to at least one application executing at the processor, the second API enabling specification of at least one set of cryptographic requirements.

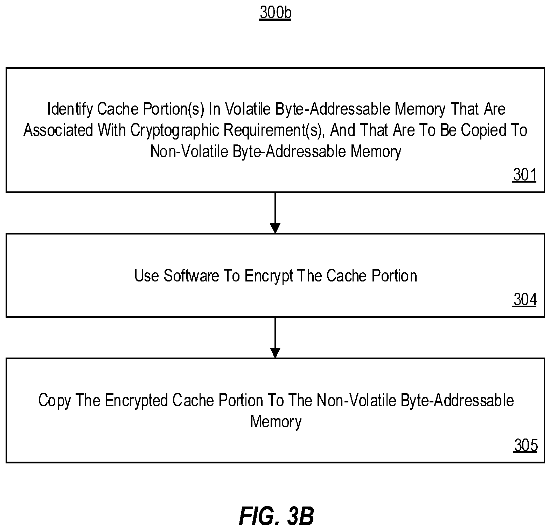

Notably, in Figure 3A, acts 302, 303, and 306 are shown in broken lines to indicate that in some embodiments these acts are optional or omitted. That is, in some embodiments, method 300a operates under the assumption that the non-volatile byte-addressable memory 104 lacks requisite (or any) cryptographic capability, and always performs software encryption. In these embodiments, the tiered memory manager 112 may omit the cryptographic capability discovery component 203 (as indicated by broken lines in Figure 2). In order to more expressly illustrate this embodiment, Figure 3B illustrates a flow chart of an example method 300b for ensuring data security when copying data from a first memory that is byte-addressable and volatile to a second memory that is byte-addressable and non-volatile. Figure 3B, method 300b includes acts 301, 304, and 305 from method 300a, but lacks acts 302, 303, and 306.

Accordingly, the embodiments herein operate to enable use of non-volatile byte-addressable memories in connection system RAM, while ensuring that data stored on non-volatile byte-addressable memories is cryptographically protected. When a portion of data is to be copied from a volatile byte-addressable memory to a non-volatile byte-addressable memory, embodiments consider a cryptographic policy associated with that data, together with cryptographic capabilities of the non-volatile byte-addressable memory (if any), and use software encryption to ensure that data placed on the non-volatile byte-addressable memory is protected per the cryptographic policy if the non-volatile byte-addressable memory does not, itself, provide sufficient cryptographic protections. As such, embodiments intelligently operate to protect data being copied from the volatile byte-addressable memory to the non-volatile byte-addressable memory-leveraging cryptographic capabilities of the non-volatile byte-addressable memory when sufficientand using software encryption when cryptographic capabilities of the non-volatile byte-addressable memory are insufficient.

Although the subject matter has been described in language specific to structural features and/or methodological acts, it is to be understood that the subject matter defined in the appended claims is not necessarily limited to the described features or acts described above, or the order of the acts described above. Rather, the described features and acts are disclosed as example forms of implementing the claims.

Embodiments of the present invention may comprise or utilize a special-purpose or general-purpose computer system that includes computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media that store computer-executable instructions and/or data structures are computer storage media. Computer-readable media that carry computer-executable instructions and/or data structures are transmission media. Thus, by way of example, and not limitation, embodiments of the invention can comprise at least two distinctly different kinds of computer-readable media: computer storage media and transmission media.

Computer storage media are physical storage media that store computer-executable instructions and/or data structures. Physical storage media include computer hardware, such as RAM, ROM, EEPROM, solid state drives ("SSDs"), flash memory, phase-change memory ("PCM"), optical disk storage, magnetic disk storage or other magnetic storage devices, or any other hardware storage device(s) which can be used to store program code in the form of computer-executable instructions or data structures, which can be accessed and executed by a general-purpose or special-purpose computer system to implement the disclosed functionality of the invention.

Transmission media can include a network and/or data links which can be used to carry program code in the form of computer-executable instructions or data structures, and which can be accessed by a general-purpose or special-purpose computer system. A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer system, the computer system may view the connection as transmission media. Combinations of the above should also be included within the scope of computer-readable media.

Further, upon reaching various computer system components, program code in the form of computer-executable instructions or data structures can be transferred automatically from transmission media to computer storage media (or vice versa). For example, computer-executable instructions or data structures received over a network or data link can be buffered in RAM within a network interface module (e.g., a "NIC"), and then eventually transferred to computer system RAM and/or to less volatile computer storage media at a computer system. Thus, it should be understood that computer storage media can be included in computer system components that also (or even primarily) utilize transmission media.

Computer-executable instructions comprise, for example, instructions and data which, when executed at one or more processors, cause a general-purpose computer system, special-purpose computer system, or special-purpose processing device to perform a certain function or group of functions. Computer-executable instructions may be, for example, binaries, intermediate format instructions such as assembly language, or even source code.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The invention may also be practiced in distributed system environments where local and remote computer systems, which are linked (either by hardwired data links, wireless data links, or by a combination of hardwired and wireless data links) through a network, both perform tasks. As such, in a distributed system environment, a computer system may include a plurality of constituent computer systems. In a distributed system environment, program modules may be located in both local and remote memory storage devices.

Those skilled in the art will also appreciate that the invention may be practiced in a cloud computing environment. Cloud computing environments may be distributed, although this is not required. When distributed, cloud computing environments may be distributed internationally within an organization and/or have components possessed across multiple organizations. In this description and the following claims, "cloud computing" is defined as a model for enabling on-demand network access to a shared pool of configurable computing resources (e.g., networks, servers, storage, applications, and services). The definition of "cloud computing" is not limited to any of the other numerous advantages that can be obtained from such a model when properly deployed.

A cloud computing model can be composed of various characteristics, such as on-demand self-service, broad network access, resource pooling, rapid elasticity, measured service, and so forth. A cloud computing model may also come in the form of various service models such as, for example, Software as a Service ("SaaS"), Platform as a Service ("PaaS"), and Infrastructure as a Service ("laaS"). The cloud computing model may also be deployed using different deployment models such as private cloud, community cloud, public cloud, hybrid cloud, and so forth.

Some embodiments, such as a cloud computing environment, may comprise a system that includes one or more hosts that are each capable of running one or more virtual machines. During operation, virtual machines emulate an operational computing system, supporting an operating system and perhaps one or more other applications as well. In some embodiments, each host includes a hypervisor that emulates virtual resources for the virtual machines using physical resources that are abstracted from view of the virtual machines. The hypervisor also provides proper isolation between the virtual machines. Thus, from the perspective of any given virtual machine, the hypervisor provides the illusion that the virtual machine is interfacing with a physical resource, even though the virtual machine only interfaces with the appearance (e.g., a virtual resource) of a physical resource. Examples of physical resources including processing capacity, memory, disk space, network bandwidth, media drives, and so forth.

## Claims

1. A method (300a), implemented at a computer system (101) that includes a processor (102), a first memory (103) that is byte-addressable and volatile, and a second memory (104) that is byte-addressable and non-volatile, for ensuring data security when copying data from the first memory to the second memory, the method comprising:
identifying (201) one or more portions of cache data stored in the first memory that are to be copied to the second memory, each portion of cache data being associated (202) with a corresponding set of cryptographic requirements for storing the portion of cache data on non-volatile storage;
identifying (203) a set of cryptographic capabilities of the second memory; and
for each of the one or more portions of cache data that are to be copied to the second memory, performing (204) one of:
when each requirement in the corresponding set of cryptographic requirements is met by the set of cryptographic capabilities, copying (206) the portion of cache data to the second memory while relying on the second memory to encrypt the portion of cache data; or
when at least one requirement in the corresponding set of cryptographic requirements is not met by the set of cryptographic capabilities,
encrypting (205) the portion of cache data to generate an encrypted portion of cache data; and
copying (206) the encrypted portion of cache data to the second memory.

2. The method of any preceding claim, wherein each portion of cache data is associated with a common set of cryptographic requirements.

3. The method of claim 1, wherein the one or more portions of cache data comprise (i) a first portion of cache data associated with a corresponding first set of cryptographic requirements, and (ii) a second portion of cache data associated with a corresponding second set of cryptographic requirements, and wherein the method comprises:
based on at least one requirement in the corresponding first set of cryptographic requirements being met by the set of cryptographic capabilities, copying the first portion of cache data to the second memory while relying on the second memory to encrypt the first portion of cache data; and
based on at least one requirement in the corresponding second set of cryptographic requirements not being met by the set of cryptographic capabilities, encrypting the second portion of cache data to generate an encrypted second portion of cache data, and copying the encrypted second portion of cache data to the second memory.

4. The method of any preceding claim, wherein the one or more portions of cache data comprise one or more trimmed memory pages in a standby list.

5. The method of any preceding claim, wherein the one or more portions of cache data comprise one or more active memory pages copied to a page file.

6. The method of any preceding claim, wherein encrypting the portion of cache data to generate the encrypted portion of cache data comprises executing one or more software instructions at the processor to encrypt the portion of cache data.

7. The method of claim 6, wherein the one or more software instructions leverage a hardware encryption acceleration capability of the processor.

8. The method of any preceding claim, further comprising presenting a first application programming interface (API) to at least one application executing at the processor, the first API identifying a least a portion of the set of cryptographic capabilities.

9. The method of any preceding claim, further comprising presenting a second application programming interface (API) to at least one application executing at the processor, the second API enabling specification of at least one set of cryptographic requirements.

10. The method of any preceding claim, wherein at least one set of cryptographic requirements includes one or more of a cryptographic key lifetime, a cryptographic key length, or a cryptographic algorithm.

11. The method of any preceding claim, wherein the set of cryptographic capabilities includes one or more of a cryptographic key lifetime, a cryptographic key length, or a cryptographic algorithm.

12. The method of any of claims 1, 2, and 4-10, wherein the set of cryptographic capabilities is an empty set.

13. The method of any preceding claim, wherein each of (i) copying the portion of cache data to the second memory, and (ii) copying the encrypted portion of cache data to the second memory are processor-bound operations.

## Patentansprüche

1. Verfahren (300a), das auf einem Computersystem (101) implementiert ist, das einen Prozessor (102), einen ersten Speicher (103), der byteadressierbar und flüchtig ist, und einen zweiten Speicher (104) einschließt, der byteadressierbar und nichtflüchtig ist, um Datensicherheit beim Kopieren von Daten aus dem ersten Speicher in den zweiten Speicher zu gewährleisten, wobei das Verfahren umfasst:
Erkennen (201) eines oder mehrerer Abschnitte von Cache-Daten, die in dem ersten Speicher gespeichert sind, die in den zweiten Speicher kopiert werden sollen, wobei jedem Abschnitt von Cache-Daten ein entsprechender Satz kryptografischer Anforderungen zum Speichern des Abschnitts von Cache-Daten auf nichtflüchtigem Speicher zugeordnet ist (202);
Erkennen (203) eines Satzes kryptographischer Fähigkeiten des zweiten Speichers; und
für jeden des einen oder der mehreren Abschnitte von Cache-Daten, die in den zweiten Speicher kopiert werden sollen, Ausführen (204) von einem aus:
wenn jede Anforderung in dem entsprechenden Satz kryptografischer Anforderungen durch den Satz kryptografischer Fähigkeiten erfüllt wird, Kopieren (206) des Abschnitts von Cache-Daten in den zweiten Speicher, wobei auf den zweiten Speicher vertraut wird, um den Abschnitt von Cache-Daten zu verschlüsseln; oder
wenn mindestens eine Anforderung in dem entsprechenden Satz kryptographischer Anforderungen durch den Satz kryptographischer Fähigkeiten nicht erfüllt wird,
Verschlüsseln (205) des Abschnitts von Cache-Daten, um einen verschlüsselten Abschnitt von Cache-Daten zu erzeugen; und
Kopieren (206) des verschlüsselten Abschnitts von Cache-Daten in den zweiten Speicher.

2. Verfahren nach einem der vorhergehenden Ansprüche, wobei jedem Abschnitt von Cache-Daten ein gemeinsamer Satz kryptografischer Anforderungen zugeordnet ist.

3. Verfahren nach Anspruch 1, wobei der eine oder die mehreren Abschnitte von Cache-Daten (i) einen ersten Abschnitt von Cache-Daten, der einem entsprechenden ersten Satz kryptografischer Anforderungen zugeordnet ist, und (ii) einen zweiten Abschnitt von Cache-Daten umfassen, der einem entsprechenden zweiten Satz kryptografischer Anforderungen zugeordnet ist, und wobei das Verfahren umfasst:
basierend darauf, dass mindestens eine Anforderung in dem entsprechenden ersten Satz kryptografischer Anforderungen durch den Satz kryptografischer Fähigkeiten erfüllt wird, Kopieren des ersten Abschnitts von Cache-Daten in den zweiten Speicher, wobei auf den zweiten Speicher vertraut wird, um den ersten Abschnitt von Cache-Daten zu verschlüsseln; und
basierend darauf, dass mindestens eine Anforderung in dem entsprechenden zweiten Satz kryptografischer Anforderungen durch den Satz kryptografischer Fähigkeiten nicht erfüllt wird, Verschlüsseln des zweiten Abschnitts von Cache-Daten, um einen verschlüsselten zweiten Abschnitt von Cache-Daten zu erzeugen, und Kopieren des verschlüsselten zweiten Abschnitts von Cache-Daten in den zweiten Speicher.

4. Verfahren nach einem der vorhergehenden Ansprüche, wobei der eine oder die mehreren Abschnitte von Cache-Daten eine oder mehrere gekürzte Speicherseiten in einer Standby-Liste umfassen.

5. Verfahren nach einem der vorhergehenden Ansprüche, wobei der eine oder die mehreren Abschnitte von Cache-Daten eine oder mehrere aktive Speicherseiten umfassen, die in eine Auslagerungsdatei kopiert wurden.

6. Verfahren nach einem der vorhergehenden Ansprüche, wobei das Verschlüsseln des Abschnitts von Cache-Daten zum Erzeugen des verschlüsselten Abschnitts von Cache-Daten das Ausführen einer oder mehrerer Softwareanweisungen auf dem Prozessor zum Verschlüsseln des Abschnitts von Cache-Daten umfasst.

7. Verfahren nach Anspruch 6, wobei die eine oder die mehreren Softwareanweisungen eine Hardware-Verschlüsselungsbeschleunigungsfähigkeit des Prozessors nutzen.

8. Verfahren nach einem der vorhergehenden Ansprüche, ferner umfassend das Bereitstellen einer ersten Anwendungsprogrammierschnittstelle (application programming interface, API) für mindestens eine auf dem Prozessor ausgeführte Anwendung, wobei die erste API mindestens einen Abschnitt des Satzes kryptografischer Fähigkeiten erkennt.

9. Verfahren nach einem der vorhergehenden Ansprüche, ferner umfassend das Bereitstellen einer zweiten Anwendungsprogrammierschnittstelle (API) für mindestens eine auf dem Prozessor ausgeführte Anwendung, wobei die zweite API die Angabe mindestens eines Satzes kryptografischer Anforderungen ermöglicht.

10. Verfahren nach einem der vorhergehenden Ansprüche, wobei mindestens ein Satz kryptografischer Anforderungen eines oder mehreres aus einer Lebensdauer kryptografischer Schlüssel, einer Länge kryptografischer Schlüssel oder einem kryptografischen Algorithmus einschließt.

11. Verfahren nach einem der vorhergehenden Ansprüche, wobei der Satz kryptografischer Fähigkeiten eines oder mehreres aus einer Lebensdauer kryptografischer Schlüssel, einer Länge kryptografischer Schlüssel oder einem kryptografischen Algorithmus einschließt.

12. Verfahren nach einem der Ansprüche 1, 2 und 4 bis 10, wobei der Satz kryptographischer Fähigkeiten ein leerer Satz ist.

13. Verfahren nach einem der vorhergehenden Ansprüche, wobei jedes (i) des Kopierens des Abschnitts von Cache-Daten in den zweiten Speicher und (ii) des Kopierens des verschlüsselten Abschnitts von Cache-Daten in den zweiten Speicher prozessorgebundene Operationen sind.

## Revendications

1. Procédé (300a), mis en oeuvre dans un système informatique (101) qui comprend un processeur (102), une première mémoire (103) adressable par octet et volatile, et une seconde mémoire (104) adressable par octet et non volatile, pour assurer la sécurité des données lors de la copie de données de la première mémoire vers la seconde mémoire, le procédé comprenant :
l'identification (201) d'une ou plusieurs parties de données de cache stockées dans la première mémoire qui doivent être copiées dans la seconde mémoire, chaque partie de données de cache étant associée (202) à un ensemble correspondant d'exigences cryptographiques pour stocker la partie de données de cache sur le stockage non volatile ;
l'identification (203) d'un ensemble de capacités cryptographiques de la seconde mémoire ; et
pour chacune de la ou des parties de données de cache qui doivent être copiées dans la seconde mémoire, la réalisation (204) de l'une des opérations suivantes :
lorsque chaque exigence dans l'ensemble correspondant d'exigences cryptographiques est satisfaite par l'ensemble de capacités cryptographiques, la copie (206) de la partie de données de cache dans la seconde mémoire tout en s'appuyant sur la seconde mémoire pour chiffrer la partie de données de cache ; ou
lorsqu'au moins une exigence dans l'ensemble correspondant d'exigences cryptographiques n'est pas satisfaite par l'ensemble de capacités cryptographiques,
le cryptage (205) de la partie de données de cache pour générer une partie cryptée de données de cache ; et
la copie (206) de la partie cryptée de données de cache dans la seconde mémoire.

2. Procédé selon l'une quelconque des revendications précédentes, dans lequel chaque partie de données de cache est associée à un ensemble commun d'exigences cryptographiques.

3. Procédé selon la revendication 1, dans lequel la ou les parties de données de cache comprennent (i) une première partie de données de cache associée à un premier ensemble correspondant d'exigences cryptographiques, et (ii) une seconde partie de données de cache associée à un second ensemble correspondant d'exigences cryptographiques, et dans lequel le procédé comprend :
sur la base du fait qu'au moins une exigence du premier ensemble correspondant d'exigences cryptographiques est satisfaite par l'ensemble de capacités cryptographiques, la copie de la première partie de données de cache dans la seconde mémoire tout en s'appuyant sur la seconde mémoire pour crypter la première partie de données de cache ; et
sur la base du fait qu'au moins une exigence dans le second ensemble correspondant d'exigences cryptographiques n'est pas satisfaite par l'ensemble de capacités cryptographiques, le cryptage de la seconde partie de données de cache pour générer une seconde partie cryptée de données de cache, et la copie de la seconde partie cryptée de données de cache dans la seconde mémoire.

4. Procédé selon l'une quelconque des revendications précédentes, dans lequel la ou les parties de données de cache comprennent une ou plusieurs pages mémoire ajustées dans une liste d'attente.

5. Procédé selon l'une quelconque des revendications précédentes, dans lequel la ou les parties de données de cache comprennent une ou plusieurs pages mémoire active copiées dans un fichier de page.

6. Procédé selon l'une quelconque des revendications précédentes, dans lequel le cryptage de la partie de données de cache pour générer la partie cryptée de données de cache comprend l'exécution d'une ou plusieurs instructions logicielles au niveau du processeur pour crypter la partie de données de cache.

7. Procédé selon la revendication 6, dans lequel la ou les instructions logicielles exploitent une capacité matérielle d'accélération de cryptage du processeur.

8. Procédé selon l'une quelconque des revendications précédentes, comprenant en outre la présentation d'une première interface de programmation d'application (API) à au moins une application s'exécutant au niveau du processeur, la première API identifiant au moins une partie de l'ensemble de capacités cryptographiques.

9. Procédé selon l'une quelconque des revendications précédentes, comprenant en outre la présentation d'une seconde interface de programmation d'application (API) à au moins une application s'exécutant au niveau du processeur, la seconde API permettant la spécification d'au moins un ensemble d'exigences cryptographiques.

10. Procédé selon l'une quelconque des revendications précédentes, dans lequel au moins un ensemble d'exigences cryptographiques comprend un ou plusieurs éléments parmi une durée de vie de clé cryptographique, une longueur de clé cryptographique ou un algorithme cryptographique.

11. Procédé selon l'une quelconque des revendications précédentes, dans lequel l'ensemble de capacités cryptographiques comprend un ou plusieurs éléments parmi une durée de vie de clé cryptographique, une longueur de clé cryptographique ou un algorithme cryptographique.

12. Procédé selon l'une quelconque des revendications 1, 2 et 4 à 10, dans lequel l'ensemble de capacités cryptographiques est un ensemble vide.

13. Procédé selon l'une quelconque des revendications précédentes, dans lequel chaque opération parmi (i) la copie de la partie des données de cache dans la seconde mémoire et (ii) la copie de la partie cryptée de données de cache dans la seconde mémoire sont des opérations liées au processeur.
